# EUROPEAN PATENT APPLICATION

(11) **EP 2 728 963 A1**
(43) Date of publication of application: **07.05.2014**
(21) Application number: 12803731.4
(22) Date of filing: 19.03.2012
(51) Int. Cl.: H04W 88/02, H04M 1/725, H04M 1/247

(54) **METHOD FOR UNLOCKING MOBILE TERMINAL**

(30) Priority: 30.06.2011 CN 201110181927
(71) Applicant: Xiaomi Inc., Beijing 100085 (CN)
(72) Inventor: XU, Ruijun, Beijing 100085 (CN); XU, Fei, Beijing 100085 (CN); JIN, Fan, Beijing 100085 (CN); LIANG, Feng, Beijing 100085 (CN); REN, Tian, Beijing 100085 (CN); LI, Weixing, Beijing 100085 (CN); SUN, Guangdou, Beijing 100085 (CN); QIN, Zhifan, Beijing 100085 (CN); LI, Wanqiang, Beijing 100085 (CN); HUANG, Jiangji, Beijing 100085 (CN)
(74) Representative: Spachmann, Holger
(86) International application number: PCT/CN2012/072554
(87) International publication number: WO 2013/000296

(57) **Abstract**

The present disclosure discloses a method for unlocking a mobile terminal. The method includes adopting a config-file to define an operation mode of unlocking the mobile terminal, adopting the config-file to define an effect of animation, adopting the config-file to establish a corresponding relation between the operation mode and the effect of animation, and triggering the effect of animation when unlocking the mobile terminal. With the technical scheme of the present disclosure, the operation mode of unlocking the mobile terminal combines with the effect of animation, helping to improve the presentation effect of unlocking mobile terminal and increase the users' interest in use.

## Description

### Field of the Invention

The present disclosure relates to a mobile terminal technology, and more particularly to a method for unlocking a mobile terminal.

### Background Information

With the development of mobile communication technology, mobile terminals have become indispensable personal electronic devices in people's lives. People may gain information, conduct office work and entertain themselves by mobile terminals. Compared with the large number of users, types and models of mobile terminals are few. Therefore, people constantly have to change the presentation effect of various applications in the mobile terminal to suit their personal preferences. Currently, mobile terminals in locked state often have black screens or single interfaces. Because the screens of the mobile terminal show little change during unlocking operation, the user's experience is poor.

### Summary of the Invention

The purpose of the present disclosure is to provide a method for unlocking a mobile terminal, helping to improve the presentation effect of unlocking mobile terminal and increase the users' interest in use.

To this end, the present disclosure adopts the following technical scheme:
A method for unlocking a mobile terminal that includes:
   adopting a config-file to define an operation mode of unlocking the mobile terminal; unlocking the mobile terminal when a unlocking operation is conducted according to the operation mode.
The above method can further include:
   adopting the config-file to define an effect of animation;
   adopting the config-file to establish a corresponding relation between the operation mode and the effect of animation;
   unlocking the mobile terminal and presenting the effect of animation when the unlocking operation is conducted according to the operation mode.

The config-file can be an XML file.

The operation mode can be clicking the screen, touching the screen or sliding along a preset path.

The operation mode can be an input of a sensor in the mobile terminal.

The sensor of the mobile terminal can be selected from a group consisting of a gravity sensor, a gyroscope, a compass, a light sensor and combinations thereof.

With the technical scheme of the present disclosure, the operation mode of unlocking the mobile terminal is combined with the effect of animation, helping to improve the presentation effect of unlocking the mobile terminal and increasing the users' interest in use.

### Description of the drawings

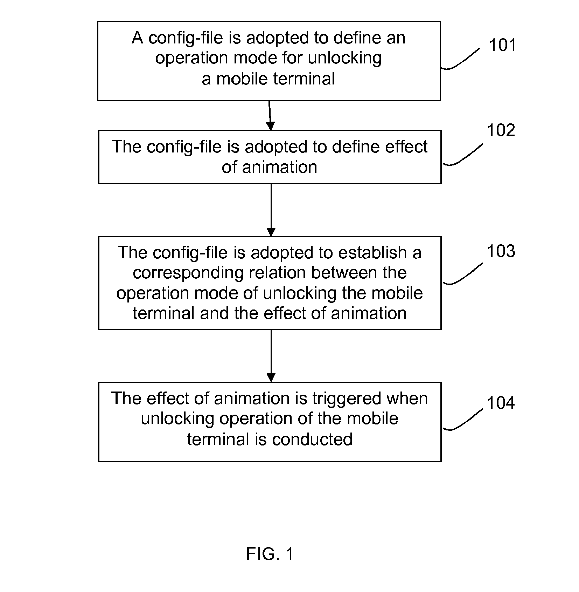

Figure 1 is a flow process chart of unlocking a mobile terminal in the embodiment of the present disclosure.

### Detailed Description of the preferred embodiments

The embodiment of the technical scheme of the present disclosure is further described with reference to the accompanying drawings.

Figure 1 is a flow process chart of unlocking a mobile terminal in the embodiment of the present disclosure. Referring to FIG. 1, the unlocking process includes the following steps.

At step 101, a config-file such as XML is adopted to define an operation mode of unlocking the mobile terminal.

The operation mode may be clicking the screen, touching the screen or sliding along a preset path. The operation mode also can be an input of the mobile terminal sensor, e.g. input of a gravity sensor, a gyroscope, a compass and/or a light sensor.

At step 102, the config-file such as an XML-file is adopted to define various effects of animation.

At step 103, the config-file such as an XML-file is adopted to establish a corresponding relation between the operation mode of unlocking the mobile terminal and the effect of animation.

At step 104, the effect of animation is triggered when the mobile terminal is unlocked. For instance, when the screen of the mobile terminal is locked, a slider on the screen slides along the predefined path, so as to trigger a head portrait on the screen to extend its greetings; moreover, the faster the sliding speed of the slider on the screen, the bigger the swinging speed or magnitude of the head portrait.

For instance, when the screen of the mobile terminal is in a locking state, a portrait stretching itself may appear on the screen at the present time or in case of alarm ringing. Also, unlocking could be judged by the input of the gravity sensor; the mobile terminal could be unlocked when shaking the mobile terminal 3 times continuously.

The above is a detailed description of the technical features of the present disclosure based on a typical specific embodiment. However, it should be appreciated that the present disclosure is capable of a variety of embodiments and various modifications by those skilled in the art, and all such variations or changes shall be embraced within the scope of the following claims.

## Claims

1. A method for unlocking a mobile terminal, comprising:
adopting a config-file to define an operation mode of unlocking the mobile terminal;
unlocking the mobile terminal when an unlocking operation is conducted according to the operation mode.

2. A method according to claim 1, further comprising:
adopting the config-file to define an effect of animation;
adopting the config-file to establish a corresponding relation between the operation mode and the effect of animation;
unlocking the mobile terminal and presenting the effect of animation when the unlocking operation is conducted according to the operation mode.

3. A method according to claim 1 or 2, wherein the config-file is an XML file.

4. A method according to one of the foregoing claims, wherein the operation mode is clicking the screen, touching the screen or sliding along a preset path.

5. A method according to one of the foregoing claims, wherein the operation mode is an input of a sensor in the mobile terminal.

6. A method of claim 5, wherein the sensor is selected from a group consisting of: a gravity sensor, a gyroscope, a compass, a light sensor and combinations thereof.
